# EUROPEAN PATENT SPECIFICATION

(11) **EP 4 200 677 B1**
(45) Date of publication and mention of the grant of the patent: **24.09.2025**
(21) Application number: 20761637.6
(22) Date of filing: 18.08.2020
(51) Int. Cl.: G05B 19/00, G05B 19/042

(54) **A METHOD AND A DATA PROCESSING SYSTEM FOR MULTI-STATE SIMULATION FOR VALIDATING THE SAFETY OF AN INDUSTRIAL SCENARIO**
VERFAHREN UND DATENVERARBEITUNGSSYSTEM ZUR MEHRZUSTANDSSIMULATION ZUR VALIDIERUNG DER SICHERHEIT EINES INDUSTRIESZENARIOS
PROCÉDÉ ET SYSTÈME DE TRAITEMENT DE DONNÉES POUR LA SIMULATION DE MULTIPLES ÉTATS EN VUE DE VALIDER LA SÉCURITÉ D'UN SCÉNARIO INDUSTRIEL

(43) Date of publication of application: 28.06.2023
(73) Proprietor: Siemens Industry Software Ltd., 7019900 Tel Aviv (IL)
(72) Inventor: BLUMENFELD, Rafael, 4336901 Raanana (IL); SCHWIMMER, Moshe, 5401187 Giv at Shmuel (IL)
(74) Representative: Siemens Patent Attorneys
(86) International application number: PCT/IB2020/057773
(87) International publication number: WO 2022/038396

(56) References cited:
- CN-A- 106 251 709
- US-A1- 2013 197 887
- US-A1- 2019 279 382
- PILANIA VINAY ET AL: "A hierarchical and adaptive mobile manipulator planner with base pose uncertainty", AUTONOMOUS ROBOTS, KLUWER ACADEMIC PUBLISHERS, DORDRECHT, NL, vol. 39, no. 1, 20 January 2015 (2015-01-20), pages 65 - 85, XP035501955, ISSN: 0929-5593, [retrieved on 20150120], DOI: 10.1007/S10514-015-9427-2

## Description

### TECHNICAL FIELD

The present disclosure is directed, in general, to computer-aided design, visualization, and manufacturing ("CAD") systems, product lifecycle management ("PLM") systems, production data management systems, and similar systems, that manage data for industrial scenarios, such as production processes and other processes (collectively, Manufacturing Execution Systems ("MES") or Manufacturing Operation Management" systems ("MOM")).

### BACKGROUND

In the planning of industrial scenarios, computer simulation techniques are used where a physical scene of a physical environment is modeled by a virtual scene of a virtual simulation environment. The physical or real scene may, for example, be a facility, a manufacturing plant, an industrial scene, or any other physical scene which may benefit from being modeled in a virtual environment for industrial simulation purposes.

The real scene may include a variety of real objects which are related to a facility. Examples of real objects include, but are not limited to, personel, workers, equipment pieces, tools, containers, material pieces, finished or semi-finished products, and other objects present in the real scene. Real objects are represented in the virtual simulation environment by virtual objects. Virtual objects are typically defined through three-dimensional (3D) virtual models, examples of which include, but are not limited to, CAD models, CAD-like models, point cloud models, and other types of 3D computer models.

In the real scene, the real objects have a position and an orientation, which can change/move as the real object is moved or re-positioned within the real scene during the industrial scenario. When modeling industrial facilities in the virtual simulation environment, it is often a common requirement that the position and the orientation of the virtual objects in the virtual scene accurately reflect the position and the orientation of the real objects in the real scene during the industrial scenario.

It is assumed that regular stationary robots with manipulators, industrial robotics, such as movable light weight robots and AGV's or any autonomous industrial equipment, such as a forklift, which are designed to work around humans with no safety guards, are at a certain risk of hitting humans, such that safety mechanisms are provided to reduce any possible damage.

Therefore, industrial robotics requires intensive planning, simulation and verification due to complexity of the physical environment and dynamic nature of the process in spatial and time domains. Today industrial robotics, due to safety constraints is often localized in fenced locations, which prevents any interaction during the process with humans. It also reduces the need for sensory information. Already today, the task of verification and simulation is highly complex and requires high performance computers with CPU, memory and GPU resources.

This challenge of planning, simulation and verification becomes extremely important in a loosely-constrained stochastic environment, which includes classic industrial robots, autonomous robots and humans, without fences.

Robots could harm humans and can destroy other robots and equipment, moreover, it can be prevented to fulfill its task. Therefore, new robotics requires and extensive sensory information about environment and responsive in dynamic manner. When introducing humans to the industrial scenario, it brings addition elements of non-deterministic behavior. Furthermore, autonomous robots introduce complex temporal and spatial behaviors.

The software that operates the robots, as other asynchronous and probabilistic behavior changes in the environment need to be verified before going to the shop floor due to safety and goal fluffiness.

Furthermore, an autonomous robot could behave totally different in the same situation, depends on the sensory information from the environment which is not fully repeatable and have tolerance and stochastic characteristics (e.g. "natural lighting with a cloud will be processed differently by a vision sensor than fully sunny lighting).

Objects, as a human, introduce an additional challenge, since they are less predictable (they don't have an "algorithm"), more prone to illogical responses and have different levels of sensitivity (no "known sensor parameters").
US2019279382 A1 discloses a system for performing four-dimensional (4D) dynamic solid modelling concepts, has processing device that recognizes action of tracked subject using three-dimensional (3D) solid volume representation, and output recognized action.
US2013197887 A1 discloses a method for capturing real-life posture and movement of human figure form e.g. avatar, involves identifying posture that avoid intersection with object in responsive to determining that generated posture intersects with object.

### SUMMARY

The invention is defined by the subject-matter of the appended claims.

### BRIEF DESCRIPTION OF THE DRAWINGS

For a more complete understanding of the present disclosure, and the advantages thereof, reference is now made to the following descriptions taken in conjunction with the accompanying drawings, wherein like numbers designate like objects, and in which:
Figure 1 illustrates a block diagram of a data processing system in which an embodiment can be implemented;
Figure 2 illustrates a schematic view of a method for multi-state simulation for validating the safety of an industrial scenario within a predefined area and within a predefined period of time;
Figure 3 illustrates a schematic view of an example with a number of objects moving during the execution of an industrial scenario;
Figure 4 illustrates a schematic view of a further example with a number of objects moving during the execution of an industrial scenario; and
Figure 5 illustrates a flowchart of a method for multi-state simulation for validating the safety of an industrial scenario within a predefined area and within a predefined period of time.

### DETAILED DESCRIPTION

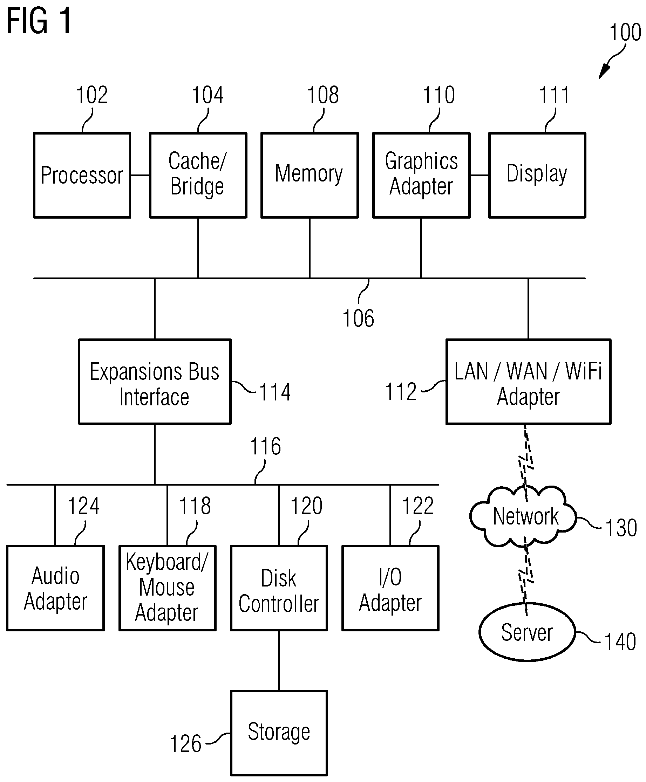

FIGURES 1 through 5, discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged device. The numerous innovative teachings of the present application will be described with reference to exemplary non-limiting embodiments.

Previous techniques for a proper handling of anti-collision management for an area of a production plant were based on an on-site analysis where robots are taken to the shop floor and production engineers tried to visually assess the robot's operations in order to figure out whether a robot may hit a human during the course of its operations. This analysis is cumbersome, tedious, error-prone, and otherwise ill-suited for the task of avoiding damage to humans operating with robots within the same production area.

Embodiments according to the present disclosure provide numerous benefits including, but not limited to: providing a user-friendly manner for simulating the collision management systematically by checking the object paths and the objects' interactions in the predefined area. Further, e.g. the production process involving robot operations and human operations within the same area of a production plant can be planned systematically, thereby avoiding collisions at least partially while or for performing modification of the production process within the simulation environment; enabling a user-friendly control of the position and of the orientation of the objects' operations in an intuitive manner so that the industrial simulation and planning is an accurate simulation of the real world process; facilitating, for non-expert users, the usage of industrial simulation packages on a shop floor (such as Process Simulate and Human Simulation provided by Siemens Product Lifecycle Management Software Inc. (Plano, Texas)) to execute the virtual simulation for ongoing production simulation.

Embodiments may be particularly beneficial for software packages which incorporate CAD environments, including, but not limited to, NX, Process Simulate, Solid Edge, and others provided by Siemens Product Lifecycle Management Software Inc. (Plano, Texas) or packages offered by other software suppliers. Embodiments combined with a CAD system may conveniently supply a complete design and simulation environment.

Figure 1 illustrates a block diagram of a data processing system 100 in which an embodiment can be implemented, for example as a MOM system particularly configured by software or otherwise to perform the processes as described herein, and in particular as each one of a plurality of interconnected and communicating systems as described herein. The data processing system 100 illustrated can include a processor 102 connected to a level two cache/bridge 104, which is connected in turn to a local system bus 106. Local system bus 106 may be, for example, a peripheral component interconnect (PCI) architecture bus. Also connected to local system bus in the illustrated example are a main memory 108 and a graphics adapter 110. The graphics adapter 110 may be connected to display 111.

Other peripherals, such as local area network (LAN) / Wide Area Network / Wireless (e.g. WiFi) adapter 112, may also be connected to local system bus 106. Expansion bus interface 114 connects local system bus 106 to input/output (I/O) bus 116. I/O bus 116 is connected to keyboard/mouse adapter 118, disk controller 120, and I/O adapter 122. Disk controller 120 can be connected to a storage 126, which can be any suitable machine usable or machine readable storage medium, including but not limited to nonvolatile, hard-coded type mediums such as read only memories (ROMs) or erasable, electrically programmable read only memories (EEPROMs), magnetic tape storage, and user-recordable type mediums such as floppy disks, hard disk drives and compact disk read only memories (CD-ROMs) or digital versatile disks (DVDs), and other known optical, electrical, or magnetic storage devices.

Also connected to I/O bus 116 in the example shown is audio adapter 124, to which speakers (not shown) may be connected for playing sounds. Keyboard/mouse adapter 118 provides a connection for a pointing device (not shown), such as a mouse, trackball, trackpointer, touchscreen, etc.

Those of ordinary skill in the art will appreciate that the hardware illustrated in Figure 1 may vary for particular implementations. For example, other peripheral devices, such as an optical disk drive and the like, also may be used in addition or in place of the hardware illustrated. The illustrated example is provided for the purpose of explanation only and is not meant to imply architectural limitations with respect to the present disclosure.

A data processing system in accordance with an embodiment of the present disclosure can include an operating system employing a graphical user interface. The operating system permits multiple display windows to be presented in the graphical user interface simultaneously, with each display window providing an interface to a different application or to a different instance of the same application. A cursor in the graphical user interface may be manipulated by a user through the pointing device. The position of the cursor may be changed and/or an event, such as clicking a mouse button, generated to actuate a desired response.

One of various commercial operating systems, such as a version of Microsoft Windows^{™}, a product of Microsoft Corporation located in Redmond, Wash. or an open source operating system, such as Linux OS, may be employed if suitably modified. The operating system is modified or created in accordance with the present disclosure as described.

LAN/ WAN/Wireless adapter 112 can be connected to a network 130 (not a part of data processing system 100), which can be any public or private data processing system network or combination of networks, as known to those of skill in the art, including the Internet. Data processing system 100 can communicate over network 130 with server system 140, which is also not part of data processing system 100, but can be implemented, for example, as a separate data processing system 100.

One or more of the processor 102, the memory 108, and the simulation program running on the processor 102 receive the inputs via one or more of the local system bus 106, the adapter 112, the network 130, the server 140, the interface 114, the I/O bus 116, the disk controller 120, the storage 126, and so on. Receiving, as used herein, can include retrieving from storage 126, receiving from another device or process, receiving via an interaction with a user, or otherwise.

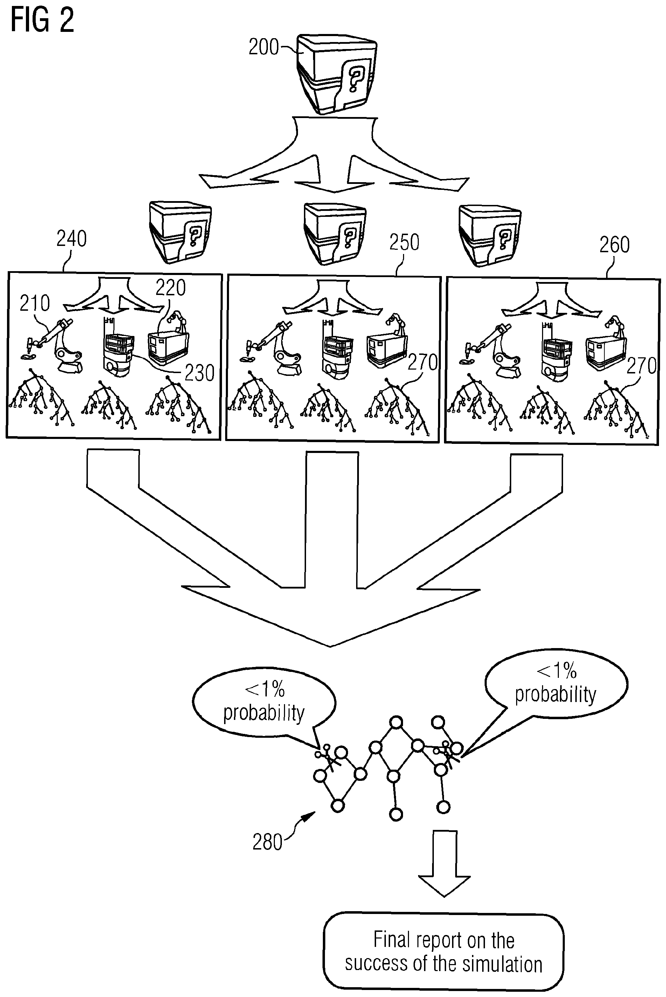

Figure 2 a schematic view of a method for multi-state simulation for validating the safety of an industrial scenario within a predefined area and within a predefined period of time. Since it is nearly impossible to solve all variations of the possible industrial scenarios in a complex set-up of objects and their trajectories in reasonable timeframe. Moreover, any scenario variation introduces additional combinations. However, it also not useful to simulate a single precise scenario when all behaviors fully determinate because due to possible variations in autonomous equipment behavior, there can be scenarios that have a different sequence, but still fulfilling the goal.

Here, the idea is to test how the whole environment behaves in different situations, as quickly as possible, with reasonable computing resources that will have to scale (for example via cloud HPC). Since each detailed and kinematic simulation can take a lot of time and computer power, the option to reduce the simulation of the details to only the scope where a suspicion for a possible physical interaction (e.g. collisions) can be assumed. As described below, the overall goal to limit the detailed simulation to those situations where different objects or "equipment" are getting dangerously close to each other during the execution of the industrial scenario.

Moreover, in order to make a reasonable number of possible scenarios - a pruning is applied to reduce the computational states in each scenario and to exclude the scenarios with small probability from further detailed consideration. Moreover, due to a static modeling of the states over time in 4 dimensions and by generating a probability field in these volumes, it is possible to achieve fast calculations and the pruning of non-probable states.

Because this is a multiple sequence system, where autonomous robots can "choose" to "behave" differently according to non-fully deterministic algorithms (e.g. ML based), the approach of verifying for each object each sequence after sequence still will require large resources. To verify different possible sequences, the simulation system will hold all the possible sequences in a respective storage. While it is highly likely that most sub-volumes of states will share some sub sequences for different objects, meaning, it is possible to use the same section of the model for different sequences, thus without duplicate calculations. For example: object A and object B share the same space at the same time for Sequence X and Sequence Y, it is only needed to do one kinematic simulation for both sequences and share the result among the sequences that cause the same constellation of the objects A and B during the execution of the industrial scenario.

Figure 2 schematically represents the key elements of the present invention. First, a sequence generator 200 is used to generate the different possible sequences for the objects (equipment, such as robots, conveyors, AGVs, etc) in the industrial scenario, such as a production process, while at the end of this step one sequence will be elected for further processing due to possible constraints or criteria, such as KPI, delivery date of a product, availability of the required resources and material and the like. This step delivers a number of possible solutions 240, 250, 260 for the objects, here a robot 210, a movable robot 220 and an AGV 230, according to the instructions for the objects that are created according to the sequences and yielding a workflow for the objects.

According to this sequence generation, a static 5D structure (X,X,Z,T,S) will be created for the environment for the industrial scenario where the location of an object will be determined by the location X,Y,Z of the object and the time T that the object was in that location and the relevant sequence S. This static 5D structure will be considered as the starting point of the simulation and will be referred to as environment reference.

For each object, a simulation will execute the workflow given by the sequences and will then calculate the possible locations and the time throughout the process defined by the sequence. The result of this simulation will be used to update the environment reference. This result is displayed in terms of location trees 270 for the presence of the objects at a distinct position in space and time during the workflow. Since the objects will not necessarily be where they were believed to be actually due to minor environment changes, each volume in the environment reference will have a certain probability that the object will actually be therein. Nonetheless, all possible locations of the objects are stored in the updated environment reference thereby revealing that some of the objects will share the same sub-volume with similar probability density as in other sequences. These objects and its locations resp. are therefore stored in the environment reference in the same volume for further deeper evaluation.

Now, once all the boxes (volumes, sub-volumes) in the environment reference are updated, a one-pass procedure is applied to go through the complete structure of the environment reference and to find those object which are in the same space at the same time (for the same sequence or also another sequence). They will be found since they are located in the same "box". These results are in the Fig. 1 displayed as a final location tree 280 where not the concept of probability is applied. For the matches of objects in the same space at the same time, the probability value will be calculated that both objects are actually sharing the same space at the same time. This probability value will be compared against a pre-defined threshold which helps to prune those matches having a probability value below the pre-defined threshold. In the example of fig. 1, those matches having a probability below 1% are pruned.

For the matches that have a probability value above the pre-defined threshold, a detailed kinematic calculation needs to be performed for objects from a specific sequence in order to guarantee the safety and correctness for the environment of the industrial scenario during the execution of the industrial scenario. If more than one sequence share the same combination of objects in space and time with a similar probability, the kinematic simulation is performed only once and the results are shared between both sequences (or even more than two sequences).

All the simulation results from all volumes with more than one object at the same time are gathered. A final conclusion is then made to identify whether the industrial scenario can be executed in a safe and correct manner and a final report is released that attests the correctness and safety of the industrial scenario. In case that the simulation still yields matches that cannot considered to satisfy the safety requirements and the probability of a failure is high, a proper report will be released identifying the relevant problematic locations and time in the environment.

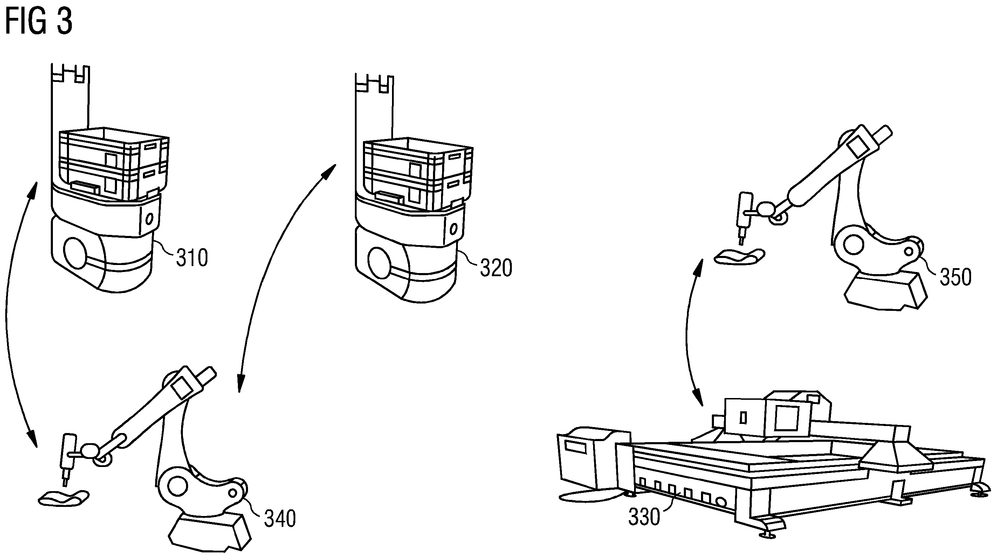

Figure 3 now in detail illustrates an example in form of a sub - manufacturing scenario. As resources, two AGV's 310, 320, one CNC machine 330 and two stationary robot arms 340 and 350 are present. The value P is defined as probability threshold that requires matches of objects having a higher probability to be in the same space at the same time as the threshold P to undergo a deep kinematic calculation to check for an actual collision.

Assuming now a relatively simple workflow in the sequence of this industrial scenario. Robot 340 is loading the two AGVs 310, 320 (separately, in turn) with material which will be brought to robot 350. Robot 350 is unloading the material to the CNC Machine 330 and will grab the produced result target.

Two possible sub-sequences are generated. In both, the time is 130 seconds after the beginning of the sequence. In both, AGV 310 is close to Robot 350, when Robot 350 is unloading AGV 320. Thus, they are in the same volume at the same time (please notice that the volume is actually 4 dimensional, so it considers time as additional dimension). In each coordinate of this volume the probability of the AGV's to be there is formed according to the physical parameters of the AGV's activities. The volume boundary can be defined by speed, possible directions and 3D pose of the AGV or the robot and has lower probability for boundaries and higher in the core. Thus, the probability of risk (p) is above a certain threshold for a risk of collision with Robot 350 during the unloading process, due to the robot speed and a possible lack of sensor coverage.

Because p > P. an analysis of the risk is needed, meaning a deep kinematic calculation must be performed. Actually, it is assumed that the analysis of the risk shows that the risk will only happen when AGV 320 is delayed, and is arriving 5 seconds late to Robot 350, e.g. due to some internal maintenance cycle or the like. Thus, this event is assigned a probability of p = 1.

For the further considerations, we assume that the center of the volume of Robot 350 has the Cartesian coordinates (3,2,4). The environment reference (X, Y, Z, T, S) for this position will look like this:
For volume (3, 2, 4), at time 130, for sequences 1 and 2:
(3, 2, 4, 130, 1) and (3, 2, 4, 130, 2)

At (3,2,4,130,1) and (3,2,4,130,2), there will be two objects: AGV 310 and 320. For AGV 320, there will probability of P (P > p) that it will be there. Thus, in total, this means that there is a probability p of collision in sequences 1 and 2 at the time 130 for the volume 3, 2, 4. Apparently, it is clear from this simple considerations that just by going over the structure in the environment reference that in volume (3,2,4,130), are two objects at the same time 130.

A deep calculation to find the collision will be done for both sequences, as there is no need to repeat the calculation twice as all other variables are the same. If the result of the calculation is that a collision is unavoidable, a relevant report will be generated, stating that there is a p probability for a collision and a failure in this manufacturing process that will happen in both sequences.

Other options in the environment reference for this volume are not calculated, because in other sequences, p remains always smaller than P. Therefore, no need to perform a deep kinematic calculation can be observed, thus saving computing resources.

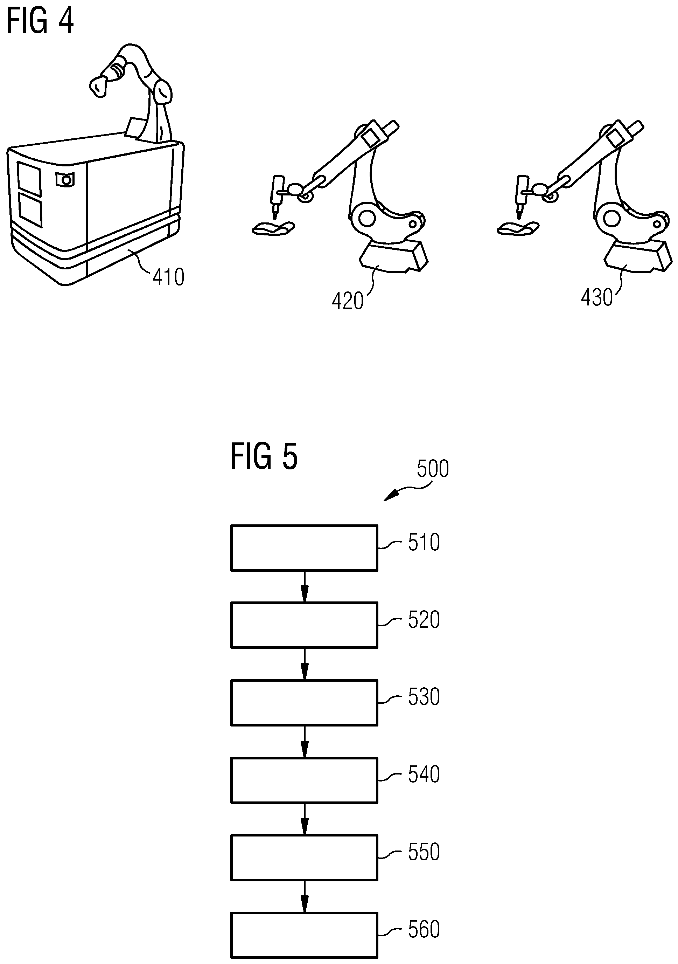

Figure 4 illustrates another simple example of the method according to the present tinvention. The resources present in this example are an AGV with an attached robot arm 410 and two stationary robots 420, 430. The workflow of the present example is as follows: Robot 420 is loading material from point A1(e.g. the target end of a first conveyor, to point B1 (e.g. a first stack). Robot 430 is loading material from point A2 (e.g. the target end of a second conveyor, to point B2 (e.g. a second stack). The AGV 410 is moving from point C to point D, having the task to assemble parts between Robot 420 and Robot 430.

For the risk analysis, it is now assume the following scenario: If points B1 or B2, e.g. the first and the second stack, are higher than 1.5 meters, which is 5 loads of materials, AGV 410 might be able to collide with the relevant robots while loading, due to the volume of the robot arm. This is considered in the control program of AGV 410 which will change the path to go around the first stack. In this case, the AGV 410 will be closer to the second stack (from B1 to B2, or the other way around).

According to the original planning, two possible sub-sequences are generated: One sub-sequence is at time 5, and the other is at 12. Both stacks are high at that time. In both times, AGV 410 tries to avoid Robot 420 and comes very close to point B2 where Robot 430 is located. The combined probability for that to happen is p2 with p2 > P). The volume of AGV 410 is (2,2,2). The environment reference (X, Y, Z, T, S) for this position will look like this:

For volume (2, 2, 2), at times 5 and 12, for sequences 1 and 2:
(2, 2, 2, 5, 1) and (2, 2, 2, 12, 2)

In (2, 2, 2, 5, 1) and (2, 2, 2, 12, 2) there will be two objects: AGV 410 and Robot 430. For the AGV 410, there will be the probability of p2 which is higher than P, that it will be at that time at that location. Thus, in total, this means that there is a p2 probability of collision in sequences 1 and 2, at times 5, 12, for the volume 2,2,2.

A deep calculation to find the collision will be done for one of the sequences, as there is no need to repeat the calculation twice as all other variables are the same. If the result of the calculation is that a collision is unavoidable, a relevant report will be generated, stating that there is a 0.1 probability for a collision and a failure in this manufacturing process (that will happen in both sequences).

Other options in ER for this volume are not calculated, because in other sequences p<P, so there is no need to do a deep kinematic calculation, thus saving computing resources.

Figure 5 illustrates a flowchart 500 method for multi-state simulation for validating the safety of an industrial scenario within a predefined area and within a predefined period of time, the method comprising the following acts:

At act 510, a static 4D or 5D structure for the environment is determined where the possible locations of the objects are determined in terms of their location and the time that the object will be in that location.

At act 520, possible spatial trajectories of objects, such as humans, production components, stationary and mobile robots, AGV's and the like, are determined in the predefined area during the industrial scenario, such as a production process, an assembling process, material handling, item sorting and the like,

At act 530, the positions and the times for the object according to the trajectories are updated in the static 4D or 5D structure.

At act 540, possible matches of objects that are present at a distinct location at a distinct time are identified and the probability of an coincident presence of the objects in the same volume is evaluated against a pre-defined threshold. Optionally, matches having a probability under the pre-defined threshold can be pruned at this stage.

At act 550, a detailed kinematic calculation is executed for those matches having a probability above the pre-defined threshold in order to identify whether these matches satisfy a pre-defined safety threshold.

At act 560, those matches that do not satisfy the pre-defined safety threshold are made subject to a respective report.

Of course, those of skill in the art will recognize that, unless specifically indicated or required by the sequence of operations, certain steps in the processes described above may be omitted, performed concurrently or sequentially, or performed in a different order.

Those skilled in the art will recognize that, for simplicity and clarity, the full structure and operation of all data processing systems suitable for use with the present disclosure is not being illustrated or described herein. Instead, only so much of a data processing system as is unique to the present disclosure or necessary for an understanding of the present disclosure is illustrated and described. The remainder of the construction and operation of data processing system 100 may conform to any of the various current implementations and practices known in the art.

It is important to note that while the disclosure includes a description in the context of a fully functional system, those skilled in the art will appreciate that at least portions of the mechanism of the present disclosure are capable of being distributed in the form of instructions contained within a machine-usable, computer-usable, or computer-readable medium in any of a variety of forms, and that the present disclosure applies equally regardless of the particular type of instruction or signal bearing medium or storage medium utilized to actually carry out the distribution. Examples of machine usable/readable or computer usable/readable mediums include: nonvolatile, hard-coded type mediums such as read only memories (ROMs) or erasable, electrically programmable read only memories (EEPROMs), and user-recordable type mediums such as floppy disks, hard disk drives and compact disk read only memories (CD-ROMs) or digital versatile disks (DVDs).

## Claims

1. A method for multi-state simulation for validating the safety of an industrial scenario within a predefined area and within a predefined period of time, wherein the industrial scenario is a production process and/or an assembling process and/or a material handling process and/or an item sorting process and wherein the industrial scenario involves the movement of objects within the predefined area and within the predefined period of time; said method comprising the steps of:
a) determining (510)
a static 5D structure for the predefined area where the possible locations of the objects are determined in terms of their location and the time that the object will be in that location;
b) determining (520)
different possible sequences for the objects in the industrial scenario in terms of possible spatial trajectories of the objects, such as humans, production components, stationary and mobile robots, AGV's and the like, in the predefined area during the industrial scenario;
c) selecting one of the possible sequences for further processing due to possible constraints and/or predetermined criteria, such as KPI, delivery date of a product, availability of the required resources and material and the like,
d) updating (530)
the positions and the times for the objects according to the trajectories for this selected sequence in the static 5D structure;
e) identifying (540)
for this selected sequence possible matches of objects that are present at a distinct location at a distinct time and evaluating the probability of a coincident presence of the objects in the same volume against a pre-defined threshold and pruning matches having a probability under the pre-defined threshold;
f) executing (550)
a detailed kinematic calculation for those matches having a probability above the pre-defined threshold in order to identify whether these matches satisfy a pre-defined safety threshold; and
g) reporting (560)
those matches that do not satisfy the pre-defined safety threshold.

2. The method of claim 1, wherein the spatial trajectories are amended for those matches not satisfying the pre-defined safety threshold and the steps b) to g) are repeated.

3. A data processing system (100) comprising a processor (102) and an accessible memory (108) for multi-state simulation for validating the safety of an industrial scenario within a predefined area and within a predefined period of time, wherein the industrial scenario is a production process and/or an assembling process and/or a material handling process and/or an item sorting process and wherein the industrial scenario involves the movement of objects within the predefined area and within the predefined period of time; said data processing system (100) particularly configured to:
a) determining a static 5D structure for the predefined area where the possible locations of the objects are determined in terms of their location and the time that the object will be in that location;
b) determining different possible sequences for the objects in the industrial scenario in terms of possible spatial trajectories of the objects, such as humans, production components, stationary and mobile robots, AGV's and the like, in the predefined area during the industrial scenario;
c) selecting one of the possible sequences for further processing due to possible constraints and/or predetermined criteria, such as KPI, delivery date of a product, availability of the required resources and material and the like,
d) updating the positions and the times for the objects according to the trajectories for this selected sequence in the static 5D structure;
e) identifying for this selected sequence possible matches of objects that are present at a distinct location at a distinct time and evaluating the probability of a coincident presence of the objects in the same volume against a pre-defined threshold and pruning matches having a probability under the pre-defined threshold;
f) executing a detailed kinematic calculation for those matches having a probability above the pre-defined threshold in order to identify whether these matches satisfy a pre-defined safety threshold; and
g) reporting those matches that do not satisfy the pre-defined safety threshold.

4. The data processing system according to claim 3, wherein the spatial trajectories are amended for those matches not satisfying the pre-defined safety threshold and the steps b) to g) are repeated.

## Patentansprüche

1. Verfahren für die Multi-State-Simulation zum Validieren der Sicherheit eines Industrieszenarios innerhalb eines festgelegten Bereichs und eines festgelegten Zeitraums, wobei es sich bei dem Industrieszenario um einen Fertigungsprozess und/oder einen Montageprozess und/oder einen Materialtransportprozess und/oder einen Artikelsortierprozess handelt und das Industrieszenario mit der Bewegung von Objekten innerhalb des festgelegten Bereichs und des festgelegten Zeitraums verknüpft ist, wobei das Verfahren folgende Schritte umfasst:
a) Bestimmen (510) einer statischen 5D-Struktur für den festgelegten Bereich, bei der die möglichen Standorte der Objekte im Hinblick auf deren Standort und die Zeit, für die das Objekt an diesem Standort sein wird, bestimmt werden,
b) Bestimmen (520) verschiedener möglicher Abläufe für die Objekte in dem Industrieszenario im Hinblick auf mögliche räumliche Bewegungsbahnen der Objekte, wie Menschen, Fertigungskomponenten, stationäre und mobile Roboter, FTF und dergleichen, in dem festgelegten Bereich im Verlauf des Industrieszenarios,
c) Auswählen eines der möglichen Abläufe für die Weiterverarbeitung aufgrund möglicher Einschränkungen und/oder vorgegebener Kriterien, wie KPI, Liefertermin für ein Produkt, Verfügbarkeit von erforderlichen Ressourcen und Material und dergleichen,
d) Aktualisieren (530) der Positionen und der Zeiten für die Objekte gemäß den Bewegungsbahnen für diesen ausgewählten Ablauf in der statischen 5D-Struktur,
e) Ermitteln (540) möglicher Übereinstimmungen von Objekten für diesen ausgewählten Ablauf, die an einem ganz bestimmten Standort zu einer ganz bestimmten Zeit vorhanden sind, und Beurteilen der Wahrscheinlichkeit eines gleichzeitigen Vorhandenseins der Objekte in dem gleichen Volumen im Vergleich zu einem festgelegten Grenzwert und Entfernen von Übereinstimmungen, deren Wahrscheinlichkeit unter dem festgelegten Grenzwert liegt,
f) Durchführen (550) einer ausführlichen kinematischen Berechnung für die Übereinstimmungen, deren Wahrscheinlichkeit über dem festgelegten Grenzwert liegt, um zu ermitteln, ob diese Übereinstimmungen einen festgelegten Sicherheitsgrenzwert einhalten, und
g) Melden (560) der Übereinstimmungen, die den festgelegten Sicherheitsgrenzwert nicht einhalten.

2. Verfahren nach Anspruch 1, wobei die räumlichen Bewegungsbahnen für Übereinstimmungen, die den festgelegten Sicherheitsgrenzwert nicht einhalten, geändert und die Schritte b) bis g) wiederholt werden.

3. Datenverarbeitungssystem (100) mit einem Prozessor (102) und einem verfügbaren Arbeitsspeicher (108) für die Multi-State-Simulation zum Validieren der Sicherheit eines Industrieszenarios innerhalb eines festgelegten Bereichs und eines festgelegten Zeitraums, wobei es sich bei dem Industrieszenario um einen Fertigungsprozess und/oder einen Montageprozess und/oder einen Materialtransportprozess und/oder einen Artikelsortierprozess handelt und das Industrieszenario mit der Bewegung von Objekten innerhalb des festgelegten Bereichs und des festgelegten Zeitraums verknüpft ist, wobei das Datenverarbeitungssystem (100) insbesondere so konfiguriert ist, dass es:
a) eine statische 5D-Struktur für den festgelegten Bereich bestimmt, bei der die möglichen Standorte der Objekte im Hinblick auf deren Standort und die Zeit, für die das Objekt an diesem Standort sein wird, bestimmt werden,
b) verschiedene mögliche Abläufe für die Objekte in dem Industrieszenario im Hinblick auf mögliche räumliche Bewegungsbahnen der Objekte, wie Menschen, Fertigungskomponenten, stationäre und mobile Roboter, FTF und dergleichen, in dem festgelegten Bereich im Verlauf des Industrieszenarios bestimmt,
c) einen der möglichen Abläufe aufgrund möglicher Einschränkungen und/oder vorgegebener Kriterien, wie KPI, Liefertermin für ein Produkt, Verfügbarkeit von erforderlichen Ressourcen und Material und dergleichen, für die Weiterverarbeitung auswählt,
d) die Positionen und die Zeiten für die Objekte gemäß den Bewegungsbahnen für diesen ausgewählten Ablauf in der statischen 5D-Struktur aktualisiert,
e) mögliche Übereinstimmungen von Objekten, die an einem ganz bestimmten Standort zu einer ganz bestimmten Zeit vorhanden sind, für diesen ausgewählten Ablauf ermittelt und die Wahrscheinlichkeit eines gleichzeitigen Vorhandenseins der Objekte in dem gleichen Volumen im Vergleich zu einem festgelegten Grenzwert beurteilt und Übereinstimmungen, deren Wahrscheinlichkeit unter dem festgelegten Grenzwert liegt, entfernt,
f) für die Übereinstimmungen, deren Wahrscheinlichkeit über dem festgelegten Grenzwert liegt, eine ausführliche kinematische Berechnung durchführt, um zu ermitteln, ob diese Übereinstimmungen einem festgelegten Sicherheitsgrenzwert gerecht werden, und
g) die Übereinstimmungen, die dem festgelegten Sicherheitsgrenzwert nicht gerecht werden, meldet.

4. Datenverarbeitungssystem nach Anspruch 3, wobei die räumlichen Bewegungsbahnen für Übereinstimmungen, die dem festgelegten Sicherheitsgrenzwert nicht gerecht werden, geändert und die Schritte b) bis g) wiederholt werden.

## Revendications

1. Procédé de simulation multi-états pour une validation de la sûreté d'un scénario industriel à l'intérieur d'une zone prédéfinie et à l'intérieur d'une période de temps prédéfinie, dans lequel le scénario industriel est un procédé de production et/ou un procédé d'assemblage et/ou un procédé de manipulation de matériau et/ou un procédé de tri d'articles et dans lequel le scénario industriel implique le mouvement d'objets à l'intérieur de la zone prédéfinie et à l'intérieur de la période de temps prédéfinie ; ledit procédé comprenant les étapes consistant à :
a) déterminer (510) une structure statique 5D pour la zone prédéfinie où les localisations possibles des objets sont déterminées en termes de leur localisation et du temps durant lequel l'objet se trouvera dans cette localisation ;
b) déterminer (520) différentes séquences possibles pour les objets dans le scénario industriel en termes de trajectoires spatiales possibles des objets, tels que êtres humains, composants de production, robots stationnaires et mobiles, AGV et similaires, dans la zone prédéfinie durant le scénario industriel ;
c) sélectionner l'une des séquences possibles pour un traitement ultérieur dû à des contraintes possibles et/ou des critères prédéterminés, tels que KPI, date de livraison d'un produit, disponibilité des ressources et matériau requis et similaires,
d) mettre à jour (530) les positions et les moments pour les objets selon les trajectoires pour cette séquence sélectionnée dans la structure statique 5D ;
e) identifier (540) pour cette séquence sélectionnée de possibles appariements d'objets qui sont présents à une localisation distincte à un moment distinct et évaluer la probabilité d'une présence concomitante des objets dans le même volume par rapport à un seuil prédéfini et des correspondances d'élagage ayant une probabilité sous le seuil prédéfini ;
f) exécuter (550) un calcul cinématique précis pour ces correspondances ayant une probabilité au-dessus du seuil prédéfini afin d'identifier si ces correspondances satisfont un seuil de sûreté prédéfini ; et
g) rapporter (560) ces correspondances qui ne satisfont pas le seuil de sûreté prédéfini.

2. Procédé selon la revendication 1, dans lequel les trajectoires spatiales sont amendées pour ces correspondances qui ne satisfont pas le seuil de sûreté prédéfini et les étapes b) à g) sont répétées.

3. Système de traitement de données (100) comprenant un processeur (102) et une mémoire accessible (108) pour une simulation multi-états pour une validation de la sûreté d'un scénario industriel à l'intérieur d'une zone prédéfinie et à l'intérieur d'une période de temps prédéfinie, dans lequel le scénario industriel est un procédé de production et/ou un procédé d'assemblage et/ou un procédé de manipulation de matériau et/ou un procédé de tri d'articles et dans lequel le scénario industriel implique le mouvement d'objets à l'intérieur de la zone prédéfinie et à l'intérieur de la période de temps prédéfinie ; ledit système de traitement de données (100) configuré particulièrement pour :
a) déterminer une structure statique 5D : pour la zone prédéfinie où les localisations possibles des objets sont déterminées en termes de leur localisation et du temps durant lequel l'objet se trouvera dans cette localisation ;
b) déterminer différentes séquences possibles pour les objets dans le scénario industriel en termes de trajectoires spatiales possibles des objets, tels que êtres humains, composants de production, robots stationnaires et mobiles, AGV et similaires, dans la zone prédéfinie durant le scénario industriel ;
c) sélectionner l'une des séquences possibles pour un traitement ultérieur dû à des contraintes possibles et/ou des critères prédéterminés, tels que KPI, date de livraison d'un produit, disponibilité des ressources et matériau requis et similaires,
d) mettre à jour les positions et les moments pour les objets selon les trajectoires pour cette séquence sélectionnée dans la structure statique 5D ;
e) identifier pour cette séquence sélectionnée de possibles appariements d'objets qui sont présents à une localisation distincte à un moment distinct et évaluer la probabilité d'une présence concomitante des objets dans le même volume par rapport à un seuil prédéfini et des correspondances d'élagage ayant une probabilité sous le seuil prédéfini ;
f) exécuter un calcul cinématique précis pour ces correspondances ayant une probabilité au-dessus du seuil prédéfini afin d'identifier si ces correspondances satisfont un seuil de sûreté prédéfini ; et
g) rapporter ces correspondances qui ne satisfont pas le seuil de sûreté prédéfini.

4. Système de traitement de données selon la revendication 3, dans lequel les trajectoires spatiales sont amendées pour ces correspondances ne satisfaisant pas le seuil de sûreté prédéfini et les étapes b) à g) sont répétées.
